# EUROPÄISCHE PATENTSCHRIFT

(11) **EP 0 392 147 B1**
(45) Veröffentlichungstag und Bekanntmachung des Hinweises auf die Patenterteilung: **12.05.1993**
(21) Anmeldenummer: 90102278.0
(22) Anmeldetag: 06.02.1990
(51) Int. Cl.: H01B 7/34

(54) **Polymermischung**
Polymer mixture
Mélange de polymères

(30) Priorität: 17.02.1989 DE 3904802
(43) Veröffentlichungstag der Anmeldung: 17.10.1990
(73) Patentinhaber: kabelmetal electro GmbH, 30179 Hannover (DE); ALCATEL N.V., NL-1077 XX Amsterdam (NL)
(72) Erfinder: Klett, Thomas A., D-7141 Murr (DE); Widler, Hansjörg, Dr., D-7302 Ostfildern 2 (DE)
(74) Vertreter: Mende, Eberhard, Dipl.-Ing.

(56) Entgegenhaltungen:
- FR-A- 2 565 024
- US-A- 4 734 545

## Beschreibung

Die Erfindung bezieht sich auf halogenfreie, flammwidrige Polymermischungen, insbesondere für Kabelmäntel. Derartige Mischungen sind bekannt.

Es sind ferner Kabelmäntel aus Chloroprenkautschuk oder chlorsulfoniertem Polyethylen bekannt, die besonders ölbeständig und abriebfest sind. Die FR-A-2 565 024 offenbart einen flammwidrigen Kabelmantel aus Polyurethan.

Der Erfindung liegt die Aufgabe zugrunde, eine Polymermischung anzugeben, die sowohl halogenfrei und flammwidrig als auch ölbeständig und abriebfest ist.

Diese Aufgabe wird durch die im Hauptanspruch angegebenen Mischungen gelöst. Vorteilhafte Ausgestaltungen sind in den Unteransprüchen enthalten.

Die Mischungen gemäß der Erfindung weisen die Vorteile auf, im Brandfall raucharm zu sein und keine korrosiven Gase freizusetzen. Sie können je nach Anwendungsfall strahlenvernetzt oder durch ein Peroxid vernetzt werden.

Die neuen Mischungen bestehen aus
- 50-90 Gewichtsteilen Polyurethan,
- 10-50 Gewichtsteilen Polyolefincopolymer,
- 125-250 Gewichtsteilen Füllstoff sowie
- 5-26 Gewichtsteilen Zusatzstoffen.

Als Polyolefincopolymer ist insbesondere ein Ethylen-Vinylacetat oder ein Ethylen-Ethylacrylat oder ein Ethylen-Propylen-Co- oder Terpolymer und als Füllstoff Aluminiumhydroxid oder Magnesiumhydroxid geeignet.

Unter den Zusatzstoffen sind Alterungsschutzmittel, Hydrolyseschutzmittel, Haftvermittler, Aktivatoren und gegebenenfalls Peroxide zu verstehen.

Das Alterungsschutzmittel bewirkt, daß oxidativer Abbau der Polymere durch hohe Temperaturen nicht oder nur sehr langsam erfolgt.

Das Hydrolyseschutzmittel bewirkt, daß die Neigung des Polyurethan, bei Temperaturen über 50°C und Feuchtigkeitseinwirkung zu hydrolisieren, stark reduziert wird.

Der Haftvermittler bewirkt die zumindest teilweise Anbindung des Füllstoffes an die Polymere und bewirkt dadurch bessere mechanische und elektrische Eigenschaften der Polymermischung.

Durch Zusatz des Aktivators wird bei gleicher Strahlungsdosis oder gleichem Peroxidgehalt ein höherer Vernetzungsgrad erreicht.

Je ein bevorzugtes Ausführungsbeispiel für eine strahlenvernetzte und eine peroxidisch vernetzte Polymermischung sind nachstehend angegeben.

Strahlenvernetzte Polymermischung:
- 80 Gewichtsteile Polyurethan,
- 20 Gewichtsteile Ethylen-Vinylacetat,
- 170 Gewichtsteile Aluminiumhydroxid,
- 3 Gewichtsteile Hydrolyseschutzmittel,
- 1 Gewichtsteil Alterungsschutzmittel,
- 1,7 Gewichtsteile Haftvermittler sowie
- 7,5 Gewichtsteile Aktivator.

Peroxidisch vernetzte Polymermischung:
- 80 Gewichtsteile Polyurethan,
- 20 Gewichtsteile Ethylen-Vinylacetat,
- 170 Gewichtsteile Aluminiumhydroxid,
- 3 Gewichtsteile Hydrolyseschutzmittel,
- 1 Gewichtsteil Alterungsschutzmittel,
- 1,7 Gewichtsteile Haftvermittler,
- 2,5 Gewichtsteile Aktivator sowie
- 6 Gewichtsteile Peroxid.

Die strahlenvernetzte Polymermischung hat eine Zugfestigkeit von 10,5 N/mm² und eine Bruchdehnung von 450 %. Die peroxidisch vernetzte Polymermischung hat eine Zugfestigkeit von 16,5 N/mm² und eine Bruchdehnung von 550 %. Beide Polymermischungen haben einen Sauerstoffindex von 35.

## Patentansprüche

1. Flammwidrige, halogenfreie Polymermischung, insbesondere für Kabelmäntel,
**dadurch gekennzeichnet**,
daß sie aus
- 50-90 Gewichtsteilen Polyurethan,
- 10-50 Gewichtsteilen Polyolefincopolymer,
- 125-250 Gewichtsteilen Füllstoff sowie
- 5-26 Gewichtsteilen Zusatzstoffen besteht.

2. Polymermischung nach Anspruch 1, dadurch gekennzeichnet, daß das Polyolefincopolymer ein Ethylen-Vinylacetat oder ein Ethylen-Ethylacrylat oder ein Ethylen-Propylen-Co- oder Terpolymer ist.

3. Polymermischung nach Anspruch 1 oder 2, dadurch gekennzeichnet, daß der Füllstoff aus Aluminiumhydroxid oder Magnesiumhydroxid besteht.

4. Polymermischung nach einem der vorhergehenden Ansprüche, dadurch gekennzeichnet, daß sie als Zusatzstoffe ein Alterungsschutzmittel, ein Hydrolyseschutzmittel, einen Haftvermittler und einen Aktivator enthält.

5. Polymermischung nach einem der vorhergehenden Ansprüche, dadurch gekennzeichnet, daß sie zusätzlich ein Peroxid zur Vernetzung enthält.

6. Polymermischung nach einem der Ansprüche 1 bis 4, dadurch gekennzeichnet, daß sie folgende Zusammensetzung aufweist:
- 80 Gewichtsteile Polyurethan,
- 20 Gewichtsteile Ethylen-Vinylacetat,
- 170 Gewichtsteile Aluminiumhydroxid,
- 3 Gewichtsteile Hydrolyseschutzmittel,
- 1 Gewichtsteil Alterungsschutzmittel,
- 1,7 Gewichtsteile Haftvermittler sowie
- 7,5 Gewichtsteile Aktivator.

7. Polymermischung nach einem der Ansprüche 1 bis 5, dadurch gekennzeichnet, daß sie folgende Zusammensetzung aufweist:
- 80 Gewichtsteile Polyurethan,
- 20 Gewichtsteile Ethylen-Vinylacetat,
- 170 Gewichtsteile Aluminiumhydroxid,
- 3 Gewichtsteile Hydrolyseschutzmittel,
- 1 Gewichtsteil Alterungsschutzmittel,
- 1,7 Gewichtsteile Haftvermittler,
- 2,5 Gewichtsteile Aktivator sowie
- 6 Gewichtsteile Peroxid.

8. Kabel mit einem Kabelmantel aus einer Polymermischung nach einem der vorhergehenden Ansprüche.

## Claims

1. Flame-resistant, halogen-free polymer mixture, in particular for cable sheaths, characterised in that it comprises
- 50-90 parts by weight of polyurethane,
- 10-50 parts by weight of polyolefin copolymer,
- 125-250 parts by weight of filler and
- 5-26 parts by weight of additives.

2. Polymer mixture according to Claim 1, characterised in that the polyolefin copolymer is an ethylenevinyl acetate or an ethylene-ethyl acrylate or an ethylene-propylene copolymer or terpolymer.

3. Polymer mixture according to Claim 1 or 2, characterised in that the filler comprises aluminium hydroxide or magnesium hydroxide.

4. Polymer mixture according to one of the preceding claims, characterised in that it contains, as additives, an antiageing agent, an antihydrolysis agent, an adhesion promoter and an activator.

5. Polymer mixture according to one of the preceding claims, characterised in that it additionally contains a peroxide for crosslinking.

6. Polymer mixture according to one of Claims 1 to 4, characterised in that it has the following composition:
- 80 parts by weight of polyurethane,
- 20 parts by weight of ethylene-vinyl acetate,
- 170 parts by weight of aluminium hydroxide,
- 3 parts by weight of antihydrolysis agent,
- 1 part by weight of an antiageing agent,
- 1.7 parts by weight of adhesion promoter and
- 7.5 parts by weight of activator.

7. Polymer mixture according to one of Claims 1 to 5, characterised in that it has the following composition:
- 80 parts by weight of polyurethane,
- 20 parts by weight of ethylene-vinyl acetate,
- 170 parts by weight of aluminium hydroxide,
- 3 parts by weight of antihydrolysis agent,
- 1 part by weight of antiageing agent,
- 1.7 parts by weight of adhesion promoter,
- 2.5 parts by weight of activator and
- 6 parts by weight of peroxide.

8. Cable having a sheath made from a polymer mixture according to one of the preceding claims.

## Revendications

1. Mélange de polymères retardeur de la combustion, exempt d'halogène, en particulier pour gaine de câble,
caractérisé par le fait qu'il est constitué de
- 50-90 parties en poids de polyuréthane,
- 10-50 parties en poids d'un copolymère de polyoléfines,
- 125-250 parties en poids de charge ainsi que de
- 5-26 parties en poids d'additifs.

2. Mélange de polymères selon la revendication 1, caractérisé par le fait que le copolymère de polyoléfines est un copolymère ou un terpolymère éthylène-acétate de vinyle ou éthylène-acrylate d'éthyle ou éthylène-propylène.

3. Mélange de polymères selon la revendication 1 ou 2, caractérisé par le fait que la charge est constituée d'un hydroxyde d'aluminium ou d'un hydroxyde de magnésium.

4. Mélange de polymères selon l'une des revendications précédentes, caractérisé par le fait qu'il contient comme additifs un agent antiviellissement, un agent antihydrolyse, un accélérateur d'adhérence et un activateur.

5. Mélange de polymères selon l'une des revendications précédentes, caractérisé par le fait qu'il contient en outre un peroxyde pour la réticulation.

6. Mélange de polymères selon l'une des revendications 1 à 4, caractérisé par le fait qu'il présente la composition suivante:
- 80 parties en poids de polyuréthane,
- 20 parties en poids d'éthylène-acétate de vinyle,
- 170 parties en poids d'hydroxyde d'aluminium,
- 3 parties en poids d'un agent antihydrolyse,
- 1 partie en poids d'un agent antiviellissement,
- 1,7 parties en poids d'un accélérateur d'adhérence ainsi que
- 7,5 parties en poids d'un activateur.

7. Mélange de polymères selon l'une des revendications 1 à 5, caractérisé par le fait qu'il présente la composition suivante:
- 80 parties en poids de polyuréthane,
- 20 parties en poids d'éthylène-acétate de vinyle,
- 170 parties en poids d'hydroxyde d'aluminium,
- 3 parties en poids d'un agent antihydrolyse,
- 1 partie en poids d'un agent antiviellissement,
- 1,7 parties en poids d'un accélérateur d'adhérence,
- 2,5 parties en poids d'un activateur ainsi que de
- 6 parties en poids d'un peroxyde.

8. Câble comprenant une gaine constituée d'un mélange de polymères selon l'une des revendications précédentes.
